# EUROPÄISCHE PATENTSCHRIFT

(11) **EP 3 686 443 B1**
(45) Veröffentlichungstag und Bekanntmachung des Hinweises auf die Patenterteilung: **15.05.2024**
(21) Anmeldenummer: 20151418.9
(22) Anmeldetag: 13.01.2020
(51) Int. Cl.: A01B 63/111, F15B 11/22

(54) **LANDWIRTSCHAFTLICHE ARBEITSMASCHINE**
AGRICULTURAL MACHINE
ENGIN DE TRAVAIL AGRICOLE

(30) Priorität: 23.01.2019 DE 202019100365 U
(43) Veröffentlichungstag der Anmeldung: 29.07.2020
(73) Patentinhaber: PÖTTINGER Landtechnik GmbH, 4710 Grieskirchen (AT)
(72) Erfinder: Ehrentraud, Michael, 4710 Grieskirchen (AT); Preimeß, Hans-Jörg, 4710 Grieskirchen (AT); Wimmer, Maximilian, 4710 Grieskirchen (AT)
(74) Vertreter: Thoma, Michael

(56) Entgegenhaltungen:
- WO-A1-2009/141697
- CN-Y- 2 267 328
- DE-A1-102012 104 699
- DE-A1-102017 102 114
- US-A- 3 783 620
- US-A1- 2008 271 445
- US-A1- 2011 290 514

## Beschreibung

Die vorliegende Erfindung betrifft eine landwirtschaftliche Arbeitsmaschine mit mehreren verstellbar gelagerten Arbeitseinheiten, die von jeweils zumindest einem Stellzylinder verstellbar sind, wobei die Stellzylinder an einen hydraulischen Mengenteiler zum Aufeinanderabstimmen der Stellzylinder-Bewegungen angeschlossen sind.

Bei landwirtschaftlichen Arbeitsmaschinen ist es oft erforderlich, mehrere hydraulische Stellzylinder synchron zueinander bzw. aufeinander abgestimmt zu betätigen, um verschiedene Arbeitseinheiten der Arbeitsmaschine in entsprechender Weise synchron bzw. aufeinander abgestimmt zu verstellen. Hierfür ist es notwendig, die hydraulischen Stellgrößen, mit denen die verschiedenen Stellzylinder angesteuert werden, aufeinander abzustimmen bzw. zu vergleichmäßigen oder gleich groß auszubilden, insbesondere die Stellzylinder mit derselben Druckmittelmenge zu betätigen.

Die Schrift DE 10 2017 102 114 A1 schlägt für eine Bodenbearbeitungsmaschine zum Höhenverstellen der Bodenwerkzeuge Doppelzylinder vor, bei denen die Kolbenstange des einen Zylinders in den Zylinderraum des anderen Zylinders ragt und dort einen Anschlag für den Kolben des anderen Zylinders bildet. Durch Einstellen der Stellung der den Anschlag bildenden Kolbenstange kann die Endposition des Verfahrbereichs des anderen Zylinders eingestellt werden. Allgemeine hydraulische Mengenteiler in Form von Mehrkolben-Zylindern sind aus den Schriften US 2008/0271445 A1 und US 3,783,620 B bekannt. Die WO 2009/141697 A1 zeigt einen Mengenteiler in Form eines Mehrfachzylinders, bei dem mehrere Kolben auf einer gemeinsamen Kolbenstange fixiert sind, um an einem Traktor die beiden Hubzylinder, die die Unterlenker der Dreipunktanlenkung anheben, synchron zu beschicken. Ferner zeigt die DE 10 2012 104 699 A1 ein Anbaugerät, das über zwei in das Fahrwerk integrierte Zylinder eine hydraulische Mengenteilung vorsieht.

Insbesondere bei landwirtschaftlichen Arbeitsmaschinen größerer Arbeitsbreite werden oftmals mehrere Stellzylinder verwendet, um verschiedene Arbeitseinheiten verstellen zu können. Beispielsweise werden solche landwirtschaftlichen Arbeitsmaschinen klappbar ausgebildet, um im Arbeitsbetrieb seitlich auskragende Arbeitseinheiten für den Straßentransport einklappen bzw. nach innen schwenken zu können, um die zugelassene Straßentransportbreite einzuhalten. Dabei können beispielsweise rechts und links auskragende Arbeitseinheiten einfach nach oben geklappt werden, oder es können mehrere Klapp- bzw. Schwenkachsen vorgesehen sein, um Arbeitseinheiten zuerst aufeinanderzu zu klappen und dann gemeinsam nach vorne oder hinten oder auch in der genannten Weise nach oben schwenken zu können, wobei den einzelnen Klapp- und Schwenkachsen entsprechende Stellzylinder zugeordnet sind, um die Klapp- bzw. Schwenkbewegung steuern zu können.

Zum anderen werden bei solchen landwirtschaftlichen Arbeitsmaschinen größerer Arbeitsbreite auch Einstellbewegungen wie beispielsweise die hydraulische Arbeitstiefeneinstellung mit mehreren Zylindern bewerkstelligt, um rechte und linke Arbeitseinheiten gleichermaßen einstellen zu können oder über die Breite eine gleichmäßige Tiefeneinstellung bewirken zu können, was mit einem einzelnen Stellzylinder nicht erreichbar wäre. Beispielsweise kann bei einem Bodenbearbeitungsgerät eine Nachläuferwalze in verschiedene Nachläufer-Einheiten unterteilt sein, die von jeweils einem Stellzylinder relativ zu den vorauslaufenden Arbeitswerkzeugen höhenverstellt werden können. Um eine gleichmäßige Arbeitstiefeneinstellung über die Arbeitsbreite der Maschine erzielen zu können, müssen die genannten Stellzylinder zueinander gleichlaufend verstellbar sein.

Um die Stellzylinder aufeinander abgestimmt verstellen bzw. miteinander synchronisieren zu können, können die Stellzylinder beispielsweise in einer Master-Slave-Anordnung miteinander verschaltet sein, sodass das von einem direkt mit der Druckquelle verbundenen Masterzylinder verdrängte Fluidvolumen als Stellvolumen auf einen Slave-Zylinder gegeben wird und dementsprechend die Verstellung des Master-Zylinders eine entsprechende Verstellung des Slave-Zylinders bewirkt. Um gleiche Stellwege bei gleichen Stellkräften zu erzielen, muss der Slave-Zylinder jedoch kleiner ausgebildet sein als der Master-Zylinder, beispielsweise wenn die Ringkammer des Master-Zylinders mit der Vollzylinderkammer des Slave-Zylinders gekoppelt ist. Werden mehr als zwei Zylinder kaskadenartig hintereinander geschaltet, werden die Zylinder immer kleiner. Hiervon abgesehen ist es grundsätzlich nachteilig, in einer Maschine unterschiedlich dimensionierte Zylinder verwenden und in der Fertigung hierfür bereithalten zu müssen. Eine Arbeitstiefeneinstellung an einer landwirtschaftlichen Arbeitsmaschine mittels einer solchen Master-Slave-Anordnung zeigt beispielsweise die Druckschrift DE 10 2010 005 183 A1.

Zum anderen ist es auch bekannt, Mengenteiler in Form von Zahnradmengenteilern oder Druckkolbenmengenteilern zu verwenden. Zahnradmengenteiler sind dabei recht genau, was die Unterteilung bzw. die Teilmengen angeht, sind jedoch sehr empfindlich gegen Schmutz und Druckstöße, was zu einem vorzeitigen Ausfall führen kann. Druckkolbenmengenteiler sind oftmals recht kompliziert aufgebaut und verwenden mehrere, kompliziert miteinander verschaltete Druckkolben.

Beispielsweise beschreibt die Schrift DE 10 2014 113 223 B4 eine hydraulische Stelleinrichtung für landwirtschaftliche Geräte, bei denen mehrere Stellzylinder mit Hilfe eines sogenannten Progressiv-Verteilers beaufschlagt werden, der aufeinander abgestimmte Stellvolumina auf die Stellzylinder gibt. Der genannte Progressiv-Verteiler umfasst dabei mehrere Kolbenpaare, deren Druckkammern über mehrere verästelte Kanäle miteinander verschaltet sind und über Bypass-Kanäle auf verschiedene Druckausgänge gegeben werden können, um in der gewünschten Weise aufeinander abgestimmte Volumina bereitstellen zu können. Solche Progressiv-Verteiler sind in der Fertigung teuer und schwierig erweiterbar bzw. schwierig für verschiedene Maschinen verwendbar, bei denen eine verschiedene Zahl von Stellzylindern synchronisiert werden soll.

Der vorliegenden Erfindung liegt die Aufgabe zugrunde, eine verbesserte landwirtschaftliche Arbeitsmaschine der eingangs genannten Art zu schaffen, die Nachteile des Standes der Technik vermeidet und letzteren in vorteilhafter Weise weiterbildet. Insbesondere soll ein einfach zu fertigendes Mengenteilersystem geschaffen werden, das unempfindlich gegen Schmutz und Druckstöße ist und variabel für verschiedene Anzahlen von Stellzylindern verwendbar ist.

Erfindungsgemäß wird die genannte Aufgabe durch eine landwirtschaftliche Arbeitsmaschine gemäß Anspruch 1 gelöst. Bevorzugte Ausgestaltungen der Erfindung sind Gegenstand der abhängigen Ansprüche.

Es wird also vorgeschlagen, als Mengenteiler einen Mehrfachzylinder einzusetzen, dessen Kolben sich synchron bewegen und exakt aufeinander abgestimmte Teilmengen bereitstellen. Erfindungsgemäß ist der Mengenteiler als Mehrfachzylinder ausgebildet, der mehrere auf einer gemeinsamen Kolbenstange fixierte Kolben aufweist, die in mehreren axial zueinander fixierten Zylinderkammern laufen und darin Ringkammern begrenzen, wobei die Stellzylinder jeweils an eine der genannten Ringkammern des Mehrfachzylinders angeschlossen sind. Bewegt sich die gemeinsame Kolbenstange, erfahren die Kolben jeweils den gleichen Stellweg, wodurch die von den Kolben begrenzten Ringkammern eine jeweils exakt definierte Volumenveränderung erfahren. Hierdurch kann in einfacher Weise eine exakte Mengenteilung erzielt werden.

Insbesondere können die mehreren Zylinderkammern in Weiterbildung der Erfindung durch ein gemeinsames, durchgängiges Zylinderrohr begrenzt sein, welches durch zumindest eine Trennwand in zumindest zwei Zylinderkammern unterteilt ist, in denen jeweils ein Kolben läuft. Die gemeinsame Kolbenstange tritt dabei durch die genannte Trennwand hindurch und durchdringt die genannten Zylinderkammern, sodass darin Ringkammern gebildet sind. Durch ein solches gemeinsames, durchgängiges Zylinderrohr kann eine einfache Ausbildung des Mehrfachzylinders erzielt werden. Alternativ zu einem durchgängigen Zylinderrohr können jedoch auch mehrere separate Zylinderteile Rücken an Rücken koaxial aneinander gesetzt werden, um gemeinsam den Mantel des Mehrfachzylinders zu bilden, wobei die Rücken an Rücken sitzenden Endkappen bzw. Stirnseiten der Zylinderteile die zuvor genannte Trennwand bilden, die Zylinderkammern abtrennt und von der gemeinsamen Kolbenstange durchdrungen wird. Beispielsweise können solche separaten Zylinderteile aneinander geschweißt werden.

Die mehreren Ringkammern des Mehrfachzylinders können insbesondere gleiche Querschnittsflächen besitzen und hierdurch gleiche hydraulische Stellgrößen bereitstellen. Durch gleiche Querschnittsflächen der Ringkammern ergeben sich bei gleichen Stellwegen der Kolben, die durch deren Fixierung auf einer gemeinsamen Kolbenstange erzielt werden, gleiche Verdrängervolumina. Wird die gemeinsame Kolbenstange durch ein vorbestimmtes Wegstück verstellt, erfahren die Ringkammern die gleiche Volumenveränderung. Alternativ könnten durch abschnittsweise verschiedene Zylindermanteldurchmesser und Kolbendurchmesser aufeinander abgestimmte, aber verschiedene Verdrängervolumina bereitgestellt werden.

Ein solcher Mehrfachzylinder kann in einfacher Weise für die Synchronisierung bzw. Aufeinanderabstimmung der Stellwege einer beliebigen Anzahl von Stellzylindern verwendet werden bzw. daran angepasst werden bzw. erweitert werden, indem durch mehrfache Unterteilung des Zylinderrohrs oder ein koaxiales Aneinandersetzen mehrerer Teilzylinder eine ausreichende Anzahl an Ringkammern des Mehrfachzylinders bereitgestellt wird. Wird der Mehrfachzylinder beispielsweise in vier Ringkammern unterteilt, können vier Stellzylinder miteinander synchronisiert werden. Werden fünf Ringkammern vorgesehen, können fünf Stellzylinder synchronisiert werden. Werden n Ringkammern im Mehrfachzylinder untergebracht, können n Stellzylinder synchronisiert werden.

Dabei müssen aber nicht immer so viele Stellzylinder an den Mehrfachzylinder angeschlossen werden, wie dieser Ringkammern aufweist. Ist beispielsweise ein Mehrfachzylinder mit fünf Ringkammern vorgesehen, kann dieser Mehrfachzylinder nichtsdestotrotz an einer landwirtschaftlichen Arbeitsmaschine eingesetzt werden, bei der nur zwei Stellzylinder synchronisiert werden müssen und es können nur zwei dieser Stellzylinder an den Mehrfachzylinder angeschlossen werden. Die übrigen Ringkammern bleiben funktionslos bzw. unangeschlossen und werden nicht mit anderen Stellzylindern verbunden, sodass sie entsprechend in Schwimmstellung leerlaufen. Dies erlaubt eine einfache Skalierung bzw. Anpassung an die jeweilige Synchronisationsaufgabe bzw. kann der Mehrfachzylinder in verschiedenen Maschinentypen eingebaut werden.

In vorteilhafter Weiterbildung der Erfindung kann der Stellweg der gemeinsamen Kolbenstange als Indikator für den Verstellweg der daran angeschlossenen Stellzylinder und/oder die Arbeitsposition der an die Stellzylinder angeschlossenen Arbeitseinheiten genutzt werden. Der Verstellweg der gemeinsamen Kolbenstange des Mehrfachzylinders ist direkt proportional zum Verstellweg der angeschlossenen Stellzylinder und damit direkt proportional zur Arbeitsstellung der damit verbundenen Arbeitseinheiten.

In Weiterbildung der Erfindung kann die gemeinsame Kolbenstange an einer Seite des Mehrfachzylinders aus dessen Gehäuse bzw. Zylinderkorpus stirnseitig herausragen und mit einer Skalenanzeige gekoppelt sein, beispielsweise in Form eines schwenkbar gelagerten Zeigers, dessen Stellung die Arbeitsposition der Arbeitseinheiten und/oder den Stellweg der Stellzylinder anzeigt.

Alternativ oder zusätzlich zu einer solchen mechanischen Skalenanlenkung an der gemeinsamen Kolbenstange kann der Stellweg der gemeinsamen Kolbenstange aber auch in anderer Weise erfasst und in ein Anzeigesignal umgewandelt werden. Beispielsweise kann in den Mehrfachzylinder ein Stellwegsensor integriert sein, der den Stellweg der gemeinsamen Kolbenstange und/oder eines daran fixierten Kolbens erfasst und ein entsprechendes Stellwegsignal bereitstellt. Das genannte Stellwegsignal kann dann an einer Anzeige, beispielsweise einem Bildschirm oder einem Display angezeigt werden.

Der als Mengenteiler fungierende Mehrfachzylinder kann mit seinen genannten Ringkammern in verschiedener Weise an die zu synchronisierenden Stellzylinder angeschlossen sein. In Weiterbildung der Erfindung kann der genannte Mehrfachzylinder zwischen einem Druckquellenanschluss der Arbeitsmaschine und den genannten Stellzylindern, das heißt auf der Druckbeaufschlagungsseite der Stellzylinder vorgesehen sein. Die Ringkammern können insbesondere als Verdrängerkammern fungieren, deren Verdrängervolumina als Stellvolumina an die Stellzylinder gegeben werden, um die genannten Stellzylinder entsprechend zu verstellen.

Insbesondere können Arbeitskammern der Stellzylinder, die die gewünschte Stellbewegung der Stellzylinder erzeugen, jeweils an eine der Ringkammern angeschlossen und vom Verdrängervolumen der jeweiligen Ringkammer beaufschlagt werden. Der Mehrfachzylinder kann dabei mit zumindest einer Druckkammer, die den mit den Stellzylindern verbundenen Ringkammern gegenüberliegt, das heißt auf einer gegenüberliegenden Kolbenseite angeordnet ist, mit einer Druckquelle bzw. einem Druckquellenanschluss des Systems verbunden werden, sodass die Druckquelle den Mehrfachzylinder verstellt und die hierdurch aus den Ringkammern verdrängten Volumina die Verstellzylinder verstellen.

Alternativ ist es grundsätzlich aber auch möglich, den Mehrfachzylinder auf der Abflussseite der Stellzylinder und/oder zwischen den Stellzylindern und einem Tankanschluss des Systems anzuordnen, um die Stellbewegungen der Stellzylinder durch Synchronisation der Abflussmengen zu synchronisieren. Vorteilhafterweise kann in diesem Fall die genannte Druckkammer, die den Ringkammern des Mehrfachzylinders gegenüberliegt, über ein Steuerventil mit einem Tankanschluss verbunden werden, um den Abfluss steuern zu können. Die Ringkammern des Mehrfachzylinders sind mit den Abfluss- bzw. Verdrängerkammern der Stellzylinder verbunden.

Vorteilhafterweise sind die Stellzylinder auch doppeltwirkend ausgebildet und können in beide bzw. gegenläufige Stellrichtungen betätigt werden, was insbesondere von Vorteil ist, wenn die an dem jeweiligen Stellzylinder angelenkte Arbeitseinheit in beide Richtungen verstellt werden soll. Beispielsweise kann dies bei einer Nachläuferwalze sinnvoll sein, die einerseits aktiv nach unten gedrückt werden soll, um die Arbeitstiefe einstellen zu können, und andererseits auch aktiv angehoben werden soll.

Sind die Stellzylinder in der genannten Weise doppeltwirkend ausgebildet, können die Stellzylinder mit jeweils einer Druckkammer an jeweils eine Ringkammer des Mehrfachzylinders angeschlossen sein. Mit einer jeweils gegenüberliegenden Drucckammer können die Stellzylinder vorteilhafterweise jeweils über ein Steuerventil wahlweise mit einer Druckquelle und/oder einem Tankanschluss bzw. dem Tank des Systems verbunden werden. Die Anbindung der gegenüberliegenden Druckkammern der Stellzylinder an das genannte Steuerventil bzw. die Druckquelle und/oder den Tank des Systems erfolgt dabei vorteilhafterweise unter Umgehung des Mehrfachzylinders. Insbesondere kann jeder der genannten Stellzylinder mit einer Drucckammer jeweils in eine Ringkammer des Mehrfachzylinders angeschlossen und mit einer jeweils gegenüberliegenden Druckkammer an dem Mehrfachzylinder vorbei, das heißt unter Umgehung des Mehrfachzylinders an die Druckquelle und/oder den Tank anschließbar sein, insbesondere über ein Steuerventil, das zwischen die Stellzylinder und einen Druckanschluss und/oder Tankanschluss geschaltet ist.

Gemäß der Erfindung ist an eine der Ringkammern des Mehrfachzylinders mehr als ein Stellzylinder angeschlossen. Dabei ist an den zumindest zwei Ringkammern des Mehrfachzylinders jeweils eine Gruppe von zumindest zwei zueinander parallel geschalteten Stellzylindern angeschlossen, sodass das Verdrängervolumen der jeweiligen Ringkammer auf zwei, drei oder mehr Stellzylinder gegeben wird, je nachdem wie viele Stellzylinder die genannte Gruppe umfasst, die an dieselbe Ringkammer angeschlossen ist.

Sind die Stellzylinder einer solchen Gruppe von parallel geschalteten, an einer gemeinsame Ringkammer des Mehrfachzylinders angebundenen Stellzylinder jeweils doppeltwirkend ausgebildet, können die Druckkammern der Stellzylinder, die nicht mit den Ringkammern des Mehrfachzylinders verbunden sind, in verschiedener Weise an das System angebunden werden. Einerseits wird zumindest ein Stellzylinder einer solchen Gruppe als Master-Zylinder genutzt und/oder mit einem weiteren Stellzylinder, der nicht an die Ringkammern des Mehrfachzylinders angebunden ist, in Serie geschaltet. Insbesondere kann das Verdrängervolumen eines Stellzylinders, der an eine Ringkammer des Mehrfachzylinders angebunden ist, auf einen nachgeschalteten Stellzylinder gegeben werden, um diesen in entsprechender Weise abgestimmt zu betätigen.

Gemäß der Erfindung umfasst die zuvor genannte Gruppe von parallel geschalteten Stellzylindern, die jeweils an eine Ringkammer des Mehrfachzylinders angebunden sind, aber auch zumindest einen Stellzylinder, der keine Serienschaltung zu einem weiteren Stellzylinder besitzt und/oder nicht als Masterzylinder dient bzw. nicht in einer Master-Slave-Anordnung verschaltet ist. Insbesondere kann ein solcher Stellzylinder mit der Druckkammer, die der an einer Ringkammer des Mehrfachzylinders angebunden Druckkammer gegenüberliegt, an dem Mehrfachzylinder vorbei direkt mit einer Druckquelle und/oder dem Tank bzw. einem mit der Druckquelle und/oder dem Tank verbindbaren Steuerventil verbunden sein.

Gemäß der Erfindung umfasst die zuvor genannte Gruppe von parallel geschalteten Stellzylindern, die an eine gemeinsame Ringkammer angeschlossen sind, also einen Stellzylinder, der mit einem weiteren Stellzylinder insbesondere in einer Master-Slave-Anordnung verschaltet ist, und ferner zumindest einen weiteren Stellzylinder, der keine Serienschaltung zu einem weiteren Zylinder aufweist und/oder direkt über ein Steuerventil an die Druckquelle und/oder den Tank anschließbar ist.

Die Erfindung wird nachfolgend anhand eines bevorzugten Ausführungsbeispiels und zugehöriger Zeichnungen näher erläutert. In den Zeichnungen zeigen:

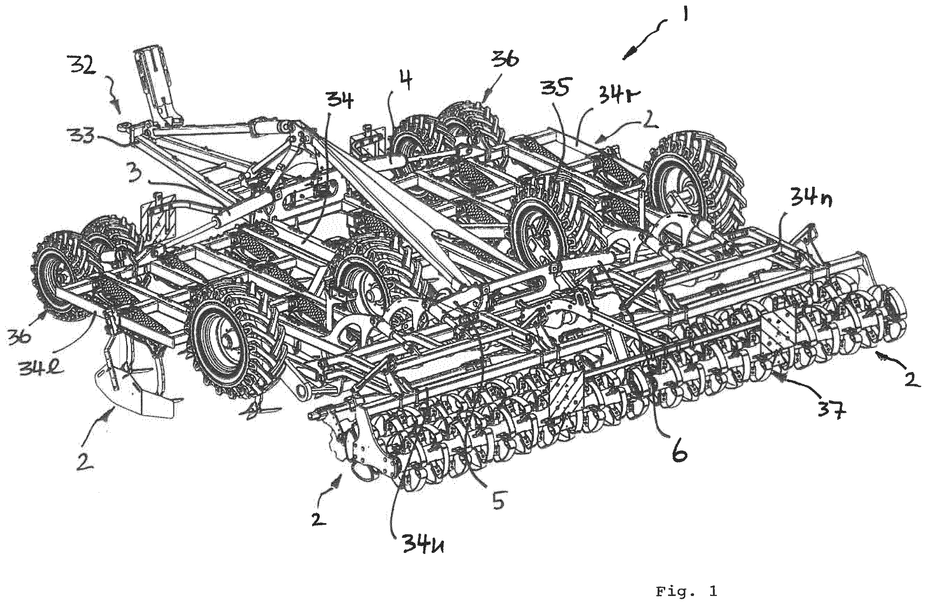

- Fig. 1:: eine perspektivische Darstellung einer landwirtschaftlichen Arbeitsmaschine schräg von hinten, wobei die Arbeitsmaschine nach einer vorteilhaften Ausführung der Erfindung in Form eines Bodenbearbeitungsgeräts mit mehreren Arbeitseinheiten ausgebildet ist, die jeweils mittels eines Stellzylinders höhenverstellbar an einem Maschinenrahmen gelagert sind,

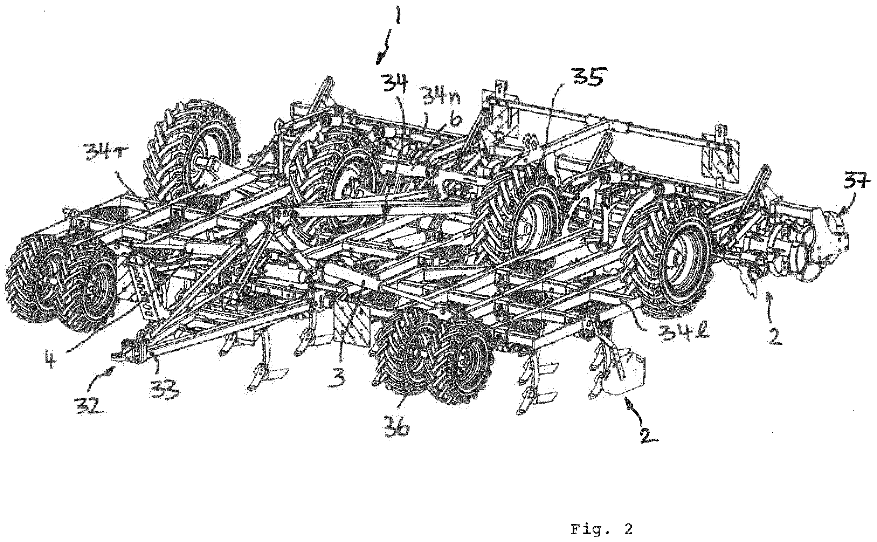

- Fig. 2:: eine perspektivische Darstellung der landwirtschaftlichen Arbeitsmaschine aus Figur 1 schräg von vorne,

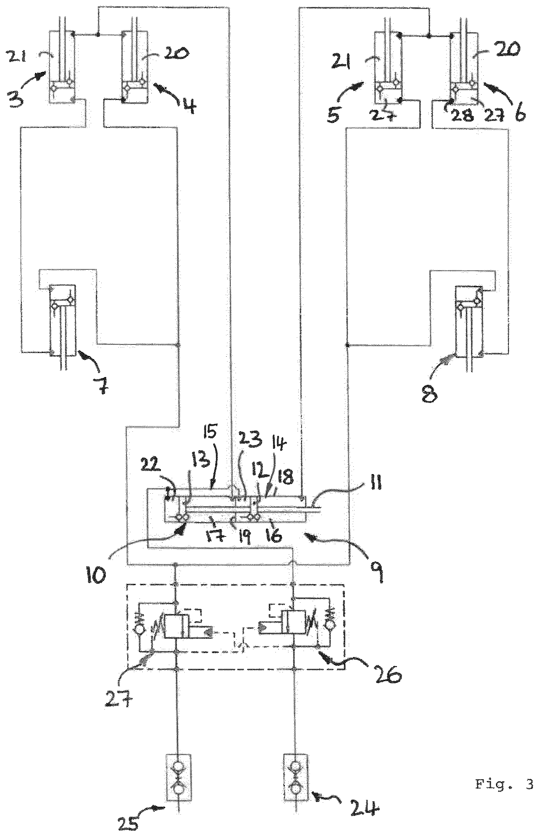

- Fig. 3:: einen hydraulischen Schaltplan der Stellzylinder zum Höhenverstellen der verschiedenen Arbeitseinheiten der landwirtschaftlichen Arbeitsmaschine aus den Figuren 1 und 2, wobei der Schaltplan die Anbindung der Stellzylinder an einen Mengenteiler in Form eines Mehrfachzylinders nach einer vorteilhaften Ausführung der Erfindung zeigt,

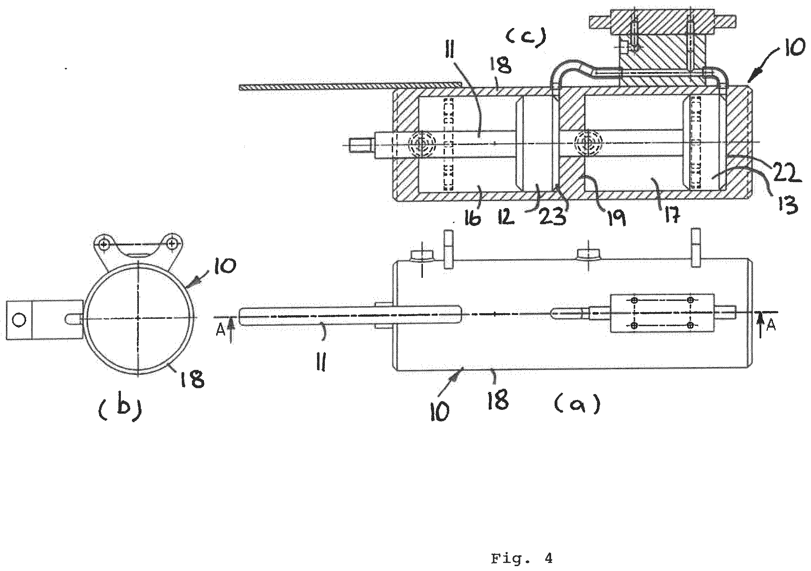

- Fig. 4:: eine Darstellung des als Mengenteiler fungierenden Mehrfachzylinders aus Figur 3, wobei die Teilansicht a eine Seitenansicht des Mehrfachzylinders, die Teilansicht b eine Stirnansicht des Mehrfachzylinders und die Teilansicht c eine Schnittansicht des Mehrfachzylinders entlang der Linie A-A aus der Teilansicht a zeigt, und

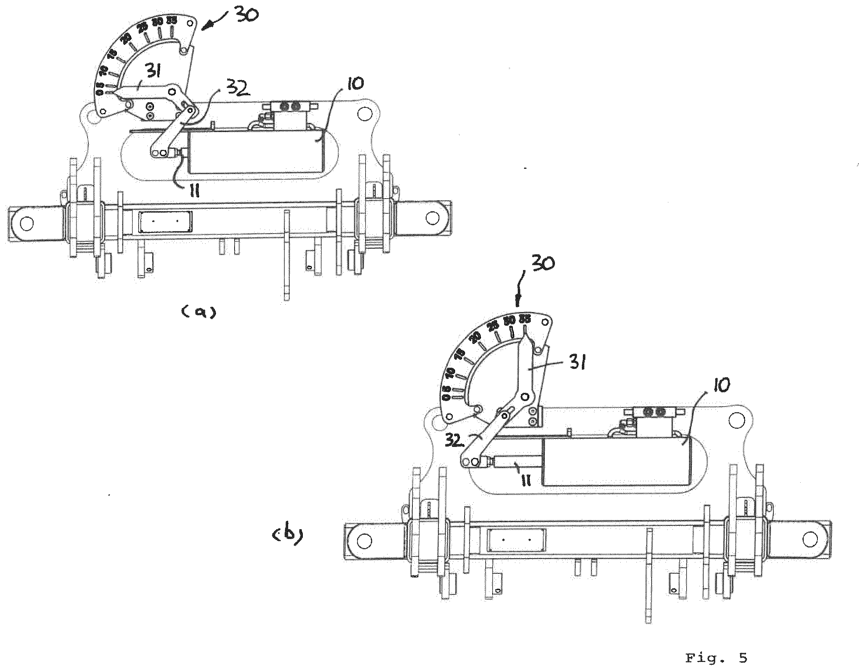

- Fig. 5:: eine Darstellung der an die Kolbenstange des Mehrfachzylinders aus den beiden vorhergehenden Figuren angebundenen Anzeigevorrichtung zum Anzeigen des Stellwegs des Mehrfachzylinders, wobei die Teilansichten a und b verschiedene Stellungen, insbesondere Endstellungen des Mehrfachzylinders zeigen.

Wie die Figuren 1 und 2 zeigen, kann die landwirtschaftliche Arbeitsmaschine 1 als Bodenbearbeitungsgerät ausgebildet sein und mehrere Arbeitseinheiten 7 umfassen. Unabhängig von der Ausbildung als Bodenbearbeitungsgerät kann die Arbeitsmaschine dabei als Anbaugerät ausgebildet sein, welches über eine Anbauvorrichtung 32 beispielsweise in Form einer Deichsel 33 an einen nicht gezeigten Schlepper angebaut und von diesem gezogen bzw. geschoben werden kann. Insbesondere kann ein solches Anbaugerät als Aufsattelgerät ausgebildet sein, welches einen zentralen Maschinenrahmen 34 umfasst, der durch ein Fahrwerk 35 am Boden abgestützt sein kann und mehrere Rahmenteile trägt, an denen Arbeitseinheiten 2 vorgesehen sind.

Im Falle des gezeigten Bodenbearbeitungsgeräts kann der zentrale Maschinenrahmen 34 rechts und links angeordnete Rahmenteile 34r und 34l umfassen, die an dem zentralen Maschinenrahmen 34 schwenkbar angelenkt sein können, um aus der in den Figuren gezeigten, abgesenkten Arbeitsstellung in eine näherungsweise aufrechte Transportstellung verbracht zu werden und hierdurch die Arbeitsbreite auf ein straßentaugliches Maß zu reduzieren. Die genannten seitlichen Rahmenteile 34r und 34l können beispielsweise umliegende, näherungsweise in Fahrtrichtung weisende Schwenkachsen am zentralen Maschinenrahmen 34 angelenkt sein.

Um die seitlichen Rahmenteile 34r und 34l mit samt der daran angebrachten Arbeitswerkzeuge in die Transportstellung ausheben zu können, können Stellzylinder 3, 4, 5 und 6 vorgesehen sein, die paarweise angeordnet sind, um einerseits einen vorderen Abschnitt und andererseits einen hinteren Abschnitt der seitlichen Rahmenteile anzuheben, vgl. Figuren 1 und 2. Die genannten Stellzylinder 3 bis 6 können einerseits am zentralen Maschinenrahmen 34 und andererseits an den seitlichen Rahmenteilen 34r und 34l angreifen.

Um für den Straßentransport die Bodenfreiheit zu erhöhen bzw. am zentralen Maschinenrahmen 34 angeordnete Bodenbearbeitungswerkzeuge auszuheben, kann gegebenenfalls das Fahrwerk 35 relativ zum Maschinenrahmen 34 höhenverstellt, insbesondere abgesenkt werden, was beispielsweise über einen oder mehrere Stellzylinder erfolgen kann.

Wie die Figuren 1 und 2 zeigen, können auch die seitlichen Rahmenteile 34r und 34l mittels eines Stütz- und/oder Tastfahrwerks 36 in der abgesenkten Arbeitsstellung am Boden abgestützt sein, wobei auch dieses Tastfahrwerk 36 gegenüber den seitlichen Rahmenteilen 34r und 34l höhenverstellbar sein kann, um die Arbeitstiefe der an den seitlichen Rahmenteilen angebrachten Arbeitswerkzeuge einstellen zu können. Zum Höhenverstellen des Tastfahrwerks 36 relativ zu den seitlichen Rahmenteilen 34r und 34l kann vorteilhafterweise ein Stellzylinder vorgesehen sein, vgl. Figuren 1 und 2.

Weitere Stellzylinder können zum Höhenverstellen eines weiteren Rahmenteils bzw. weiterer Rahmenteile 34n vorgesehen sein, die beispielsweise eine Nachläufereinheit 37 beispielsweise in Form einer Rillenwalze tragen können. Die genannten Rahmenteile 34n für die Nachläufereinheit 37 können beispielsweise um eine - in der Arbeitsstellung - liegende Querachse schwenkbar an den vorauslaufenden seitlichen Rahmenteilen 34r und 34l angelenkt sein, um die Nachläufereinheit in ihrer Höhenstellung relativ zu den vorauslaufenden Rahmenteilen 34r und I einstellen zu können, was über weitere Stellzylinder erfolgen kann, die in den Figuren 1 und 2 gezeigt sind.

Wie die Figuren 1 und 2 zeigen, können die Arbeitseinheiten 2, die durch die seitlichen und hinteren Rahmenteile 34r, I, n getragen werden, verschiedene Arbeitswerkzeuge umfassen, die im Falle einer Bodenbearbeitungsmaschine beispielsweise Grubberzinken, Scharscheiben, Pflugschare, Zustreicher und ähnliches umfassen können.

Werden die seitlichen Rahmenteile 34r und I einschließlich der heckseitig angebrachten Rahmenteile 34n in die Transportstellung ausgehoben, was durch Einfahren der Stellzylinder 3 bis 6 bewerkstelligt werden kann, können weitere Stellzylinder 7 und 8 mitbetätigt werden, um beispielsweise das Fahrwerk 35 abzusenken und hierdurch die Bodenfreiheit zu erhöhen, oder um das Tastfahrwerk 36 weiter einzufahren und hierdurch die Transportbreite weiter zu verringern, oder um die Nachläufereinheiten 37 weiter einzufahren und hierdurch ebenfalls die Transportbreite weiter zu reduzieren. Andere zusätzliche Stellbewegungen sind möglich, um eine bessere Transportkonfiguration zu erreichen, wobei beispielsweise die zuvor genannte Deichsel 33 bei Ausbildung als Knickdeichsel nach unten gewippt werden kann, um die Bodenfreiheit zu erhöhen.

Insofern können die nachfolgend beschriebenen zusätzlichen Stellzylinder 7 und 8 verschiedene Funktionen ausführen.

Nachfolgend wird die Betätigung der Stellzylinder 3 bis 6 näher erläutert, um den Mengenteiler 9 und dessen Ausbildung zu illustrieren. Es versteht jedoch, dass in entsprechender Weise von dem Mengenteiler 9 auch andere Stellzylinder aufeinander abgestimmt betätigt werden können, beispielsweise die Stellzylinder zum Absenken der Nachläufereinheiten 37 durch nach unten schwenken der heckseitigen Rahmenteile 34n, um eine Arbeitstiefeneinstellung zu erzielen und/oder die damit verknüpfte Betätigung des Tastfahrwerks 36. Insofern ist das nachfolgend erläuterte Beispiel der Betätigung der Stellzylinder 3 bis 6 und den zugeordneten Zusatzzylindern 7 und 8 nur illustrativ eine vorteilhafte Ausführungsoption.

Wie Figur 3 zeigt, können die Stellzylinder 3 bis 6 paarweise parallel geschaltet sein und als parallel geschaltetes Paar an den Mengenteiler 9 angeschlossen sein.

Der genannte Mengenteiler 9 umfasst den Mehrfachzylinder 10, der mehrere - im gezeigten Ausführungsbeispiel 2 - Kolben 12 und 13 umfasst, die auf einer gemeinsamen Kolbenstange 11 fixiert sind. Der Mantel des Mehrfachzylinders 10 kann durch ein gemeinsames, durchgängiges Zylinderrohr 18 gebildet sein, in dem sämtliche Kolben 12 und 13 laufen.

Wie Figur 3 zeigt, kann das genannte Zylinderrohr 18 durch eine oder mehrere Trennwände 19 in zwei oder mehr Zylinderkammern 14 und 15 unterteilt sein, in denen jeweils einer der genannten Kolben 12 und 13 läuft. Die gemeinsame Kolbenstange 11 durchdringt die genannte Trennwand 19, sodass in beiden Zylinderkammern 14 und 15 jeweils Ringkammern 16 und 17 definiert sind, die gleiche Querschnittsflächen aufweisen und durch Verschieben der Kolbenstange 11 und der daran fixierten Kolben 12 und 13 dieselbe Volumenänderung erfahren.

An die genannten Ringkammern 16 und 17 ist jeweils ein Paar der parallel geschaltet zusammengefassten Stellzylinder 3 und 4 bzw. 5 und 6 angebunden, vgl. Figur 3. Dementsprechend werden die aus den Ringkammern 16 und 17 jeweils verdrängten Verdrängervolumina als Stellvolumina in die Arbeitskammern 20 und 21 der Stellzylinder 3 bis 6 gegeben, um diese einzufahren. Je nach Anordnung der Stellzylinder könnte die Anordnung aber auch umgekehrt getroffen sein, das heißt die Stellzylinder ausgefahren werden.

Eingangsseitig bzw. mit den Druckkammern 22 und 23, die den zuvor genannten Ringkammern 16 und 17 gegenüberliegen, wird der Mehrfachzylinder 10 vorzugsweise über ein Steuerventil an eine Druckquelle 24 und bei entgegengesetzter Betätigung an einen Tank 25 angeschlossen bzw. an entsprechende Druckquellen- und/oder Tankanschlüsse, die an dem Anbaugerät vorgesehen sind, um an die Druck- und Tankanschlüsse des Schleppers angeschlossen zu werden.

Wird von der Druckquelle 24 über das Steuerventil 26 Druck in die genannten Druckkammern 22 und 23 des Mehrfachzylinders 10 gegeben, verschieben sich dessen Kolben 12 und 13 durch ihre Fixierung auf der gemeinsamen Kolbenstange 11 synchron miteinander, sodass aufeinander abgestimmt aus den Ringkammern 16 und 17 ein entsprechendes Volumen verdrängt wird, das zur Betätigung der daran angeschlossenen Stellzylinder 3 bis 6 führt. Sind dies die Aushubzylinder wie zuvor beschrieben, werden die seitlichen Rahmenteile 34r und 34l in die Transportstellung ausgehoben.

Wie Figur 3 zeigt, kann an zumindest einen der Stellzylinder 3 bis 6 ein weiterer Stellzylinder 7 bzw. 8 in Serie geschaltet angebunden werden, insbesondere nach Art einer Master-Slave-Anordnung. Insbesondere kann das beim Betätigen der Stellzylinder 3 und 6 aus deren Druckkammern 27 verdrängtes Druckmittel als Stellvolumen auf die weiteren Stellzylinder 7 und 8 gegeben werden, um diese einzufahren, vgl. Figur 3. Das hierbei aus den genannten weiteren Stellzylindern 7 und 8 wiederum verdrängte Druckmittelvolumen kann vorzugsweise über ein weiteres Steuerventil 27 an dem Mengenteiler 9 vorbei zum Tank 25 rückgeführt werden. In entsprechender Weise kann auch das Verdrängervolumen, das beim Betätigen der Stellzylinder 4 und 5 aus deren Druckkammer 27 verdrängt wird, vorzugsweise über das genannte Steuerventil 27 in den Tank 25 unter Umgehung des Mehrfachzylinders 10 rückgeführt werden bzw. abgelassen werden.

Werden die Stellzylinder 3 bis 6 und die zusätzlichen, mit einem der Stellzylinder 3 bis 6 in Serie geschalteten Stellzylinder 7 und 8 umgekehrt betätigt, um die Arbeitseinheiten 7 wieder in die Transportstellung abzusenken, können die genannten Stellzylinder in umgekehrter Richtung aktiv druckbeaufschlagt werden oder schwerkraftbetätigt durch das Gewicht der Arbeitseinheiten 7 nach unten gezogen werden, wodurch sich eine umgekehrte Volumenverdrängung und Beaufschlagung der Zylinder ergibt.

Wie die Figuren 3 und 4 verdeutlichen, kann die gemeinsame Kolbenstange 11 des Mehrfachzylinders 10 an einer Stirnseite des Mehrfachzylinders 10 aus dessen Zylinderkorpus herausragen, um eine Skalenanzeige zu betätigen, vgl. Figur 5. Die Anzeigevorrichtung 30 kann einen schwenkbar gelagerten Zeiger 31 umfassen, der von einem mit der Kolbenstange 11 verbundenen Betätiger 38 beispielsweise in Form eines Hebels betätigt werden, sodass der Zeiger 31 proportional zum Stellweg der Kolbenstange 11 verstellt wird. Entsprechend den beiden Endstellungen der Kolbenstange 11 kann der Zeiger 31 zwischen zwei Endstellungen verschwenkt werden.

Die Stellung der Kolbenstange 11 und damit die Stellung des Zeigers 31 der Anzeigevorrichtung 30 geben die Stellung der betätigten Stellzylinder 3 bis 8 an und indizieren den Aushubzustand der Arbeitseinheiten 2. Werden in entsprechender Weise die Stellzylinder einer Arbeitstiefen-Einstellvorrichtung über den Mehrfachzylinder 10 betätigt und verstellt, kann die Anzeigevorrichtung 30 auch eine Arbeitstiefeneinstellung bilden.

## Patentansprüche

1. Landwirtschaftliche Arbeitsmaschine mit mehreren verstellbar gelagerten Arbeitseinheiten (2), die von jeweils zumindest einem Stellzylinder (3, 4; 5, 6; 7, 8) höhenverstellbar und/oder aushebbar sind, wobei die Stellzylinder an einen hydraulischen Mengenteiler (9) zum Aufeinanderabstimmen der Stellzylinder-bewegungen angeschlossen sind, wobei der Mengenteiler (9) als Mehrfachzylinder (10) ausgebildet ist, der mehrere auf einer gemeinsamen Kolbenstange (11) fixierte Kolben (12, 13) aufweist, die in mehreren axial zueinander fixierten Zylinderkammern (14, 15) laufen und darin Ringkammern (16, 17) begrenzen, **dadurch gekennzeichnet, dass** an die zumindest zwei Ringkammern (16, 17) des Mehrfachzylinders (10) jeweils eine Gruppe von zumindest zwei zueinander parallel geschalteten Stellzylinder (3, 4; 5, 6) angeschlossen ist, die jeweils mit einer Arbeitskammer (20, 21) an eine der genannten Ringkammern (16, 17) des Mehrfachzylinders (10) angeschlossen sind, wobei zumindest einer der Stellzylinder (3, 4; 5, 6) einer jeweiligen Gruppe doppelt wirkend ausgebildet und mit einem weiteren Stellzylinder (7, 8) nach Art einer Master-Slave-Zylinderanordnung in Serie geschaltet ist und zumindest ein anderer der Stellzylinder (3, 4; 5, 6) einer jeweiligen Gruppe unter Umgehung des weiteren Stellzylinder (7, 8) über ein Steuerventil (27) an die Druckquelle (24) und/oder den Tank (25) angeschlossen ist.

2. Landwirtschaftliche Arbeitsmaschine nach dem vorhergehenden Anspruch, wobei die mehreren Zylinderkammern (14, 15) durch ein gemeinsames, durchgängiges Zylinderrohr (18) begrenzt sind, das durch zumindest eine Trennwand (19) in zumindest zwei Zylinderkammern (14, 15) unterteilt ist, wobei die Kolbenstange (11) durch die genannte zumindest eine Trennwand (19) hindurchtritt.

3. Landwirtschaftliche Arbeitsmaschine nach Anspruch 1, wobei die mehreren Zylinderkammern (14, 15) von separaten Zylinderteilen begrenzt sind, die Rücken an Rücken koaxial aneinander gesetzt und starr miteinander verbunden sind.

4. Landwirtschaftliche Arbeitsmaschine nach einem der vorhergehenden Ansprüche, wobei die mehreren Ringkammern (16, 17) gleich große Querschnittsflächen zum Bereitstellen gleicher hydraulischer Stellgrößen besitzen.

5. Landwirtschaftliche Arbeitsmaschine nach einem der vorhergehenden Ansprüche, wobei Arbeitskammern der Stellzylinder (3, 4; 5, 6), die die gewünschte Stellbewegung der Stellzylinder (3, 4; 5, 6) erzeugen, jeweils an eine der Ringkammern (16, 17) des Mehrfachzylinders (10) angeschlossen und vom Verdrängervolumen der jeweils angeschlossenen Ringkammer (16, 17) beaufschlagt sind, wobei der Mehrfachzylinder (10) mit zumindest einer Druckkammer (22, 23), die den mit den Stellzylindern (3, 4; 5, 6) verbundenen Ringkammern (16, 17) gegenüberliegt, mit einer Druckquelle verbindbar oder mit einem Druckquellenanschluss verbunden ist.

6. Landwirtschaftliche Arbeitsmaschine nach dem vorhergehenden Anspruch, wobei sämtliche Druckkammern (22, 23) des Mehrfachzylinders (10), die den mit den Stellzylindern (3, 4; 5, 6) verbundenen Ringkammern (16, 17) des Mehrfachzylinders (10) entgegen arbeiten, zueinander parallel geschaltet an die genannte Druckquelle (24) anschließbar sind.

7. Landwirtschaftliche Arbeitsmaschine nach einem der beiden vorhergehenden Ansprüche, wobei die zumindest eine Druckkammer (22, 23) des Mehrfachzylinders (10), die den Ringkammern (16, 17) des Mehrfachzylinders (10) entgegen arbeitet, über ein Steuerventil (26), insbesondere ein Drucksteuerventil, an die genannte Druckquelle (24) angeschlossen ist.

8. Landwirtschaftliche Arbeitsmaschine nach einem der vorhergehenden Ansprüche, wobei die an den Mehrfachzylinder (10) angeschlossenen Stellzylinder (3, 4; 5, 6) unter Umgehung des Mehrfachzylinders (10) mit der Druckquelle (24) und/oder dem Tank (25) über ein Steuerventil (27) und/oder über einen in Serie geschalteten weiteren Stellzylinder (7, 8) verbindbar ist.

9. Landwirtschaftliche Arbeitsmaschine nach einem der vorhergehenden Ansprüche, wobei die Stellzylinder (3, 4; 5, 6) einer jeden Gruppe jeweils eine Druckkammer (27) aufweist, die der mit einer Ringkammer (16, 17) des Mehrfachzylinders (10) verbundenen Arbeitskammer (20, 21) gegenüberliegt und jeweils einen Druckanschluss (28) zum Anschließen an die Druckquelle (24) und/oder den Tank (25) aufweist, insbesondere über ein Steuerventil (26), wobei einer der Stellzylinder einer jeden Gruppe mit dem genannten Druckanschluss (28) an einen weiteren Stellzylinder (7, 8) angeschlossen ist und ein weiterer Stellzylinder derselben Gruppe mit dem genannten Druckanschluss (28) unter Umgehung des genannten weiteren Stellzylinders (7, 8) und Umgehung des Mehrfachzylinders (10) an die Druckquelle (24) und/oder den Tank (25) über ein Steuerventil (27) angeschlossen ist.

10. Landwirtschaftliche Arbeitsmaschine nach einem der vorhergehenden Ansprüche, wobei eine Anzeigevorrichtung (30) zum Anzeigen des Stellwegs der Stellzylinder (3, 4; 5, 6) und/oder Anzeigen der Arbeitsposition der Arbeitseinheiten (2) vorgesehen ist, die in Abhängigkeit des Stellwegs der Kolbenstange (11) arbeitend ausgebildet ist und als Eingangsstellgröße den Stellweg der Kolbenstange (11) empfängt.

11. Landwirtschaftliche Arbeitsmaschine nach dem vorhergehenden Anspruch, wobei die Anzeigevorrichtung (30) einen Zeiger (31) aufweist, der mechanisch an die Kolbenstange (11) angelenkt ist.

12. Landwirtschaftliche Arbeitsmaschine nach dem vorhergehenden Anspruch, wobei die Kolbenstange (11) stirnseitig aus dem Mehrfachzylinder (10) heraustritt und mit ihrem heraustretenden Kolbenstangenabschnitt gelenkig mit dem genannten Zeiger (31) verbunden ist.

## Claims

1. Agricultural working machine with a plurality of adjustably-mounted working units (2), each of which can be adjusted in height and/or raised by at least one adjusting cylinder (3, 4; 5, 6; 7, 8), wherein the adjusting cylinders are connected to a hydraulic flow divider (9) for coordinating the adjusting cylinder movements, wherein the flow divider (9) is configured as a multi-position cylinder (10) which comprise a plurality of pistons (12, 13) fixed on a common piston rod (11) which extend in multiple cylinder chambers (14, 15) fixed axially relative to one another and define annular chambers (16, 17) therein, **characterized in that** connected to the at least two annular chambers (16, 17) of the multi-position cylinder (10) is in each case a group of at least two adjusting cylinders (3, 4, 5, 6) connected in parallel with one another and which are each connected by a working chamber (20, 21) to one of the annular chambers (16, 17) of the multi-position cylinder (10), wherein at least one of the adjusting cylinders (3, 4; 5, 6) of a respective group is configured to be double-acting and is connected in series with a further adjusting cylinder (7, 8) in the manner of a master-slave cylinder arrangement and at least another one of the adjusting cylinders (3, 4; 5, 6) of a respective group is connected to the pressure source (24) and/or the tank (25) via a control valve (27), bypassing the further adjusting cylinder (7, 8).

2. Agricultural working machine according to the preceding claim, wherein the multiple cylinder chambers (14, 15) are delimited by a common, continuous cylinder liner (18) which is divided into at least two cylinder chambers (14, 15) by at least one partition wall (19), wherein the piston rod (11) passes through said at least one partition wall (19).

3. Agricultural working machine according to claim 1, wherein the multiple cylinder chambers (14, 15) are delimited by separate cylinder parts which are placed coaxially back to back and are rigidly connected to one another.

4. Agricultural working machine according to one of the preceding claims, wherein the multiple annular chambers (16, 17) have cross-sectional areas of equal size for providing identical hydraulic control variables.

5. Agricultural working machine according to one of the preceding claims, wherein working chambers of the adjusting cylinders (3, 4; 5, 6), which generate the desired actuating movement of the adjusting cylinders (3, 4; 5, 6) are each connected to one of the annular chambers (16, 17) of the multi-position cylinder (10) and are acted upon by the displacement volume of the respectively connected annular chamber (16, 17), wherein the multi-position cylinder (10) can be connected to a pressure source or is connected to a pressure source connection with at least one pressure chamber (22, 23), which is located opposite the annular chambers (16, 17) connected to the adjusting cylinders (3, 4; 5, 6).

6. Agricultural working machine according to the preceding claim, wherein all the pressure chambers (22, 23) of the multi-position cylinder (10), which counteract the annular chambers (16, 17) of the multi-position cylinder (10) connected to the adjusting cylinders (3, 4; 5, 6), can be connected to said pressure source (24) parallelly-connected to one another.

7. Agricultural working machine according to one of the two preceding claims, wherein the at least one pressure chamber (22, 23) of the multi-position cylinder (10), which counteracts the annular chambers (16, 17) of the multi-position cylinder (10), is connected to said pressure source (24) via a control valve (26), in particular a pressure control valve.

8. Agricultural working machine according to one of the preceding claims, wherein the adjusting cylinders (3, 4; 5, 6) connected to the multi-position cylinder (10) can be connected to the pressure source (24) and/or the tank (25) via a control valve (27) and/or via a further serially-connected adjusting cylinder (7, 8) while bypassing the multi-position cylinder (10).

9. Agricultural working machine according to one of the preceding claims, wherein the adjusting cylinders (3, 4; 5, 6) of each group each have a pressure chamber (27) which is opposite the working chamber (20, 21) connected to an annular chamber (16, 17) of the multi-position cylinder (10) and each have a pressure connection (28) for connection to the pressure source (24) and/or the tank (25), in particular via a control valve (26), wherein one of the adjusting cylinders of each group is connected to a further adjusting cylinder (7, 8) with said pressure connection (28) and a further adjusting cylinder of the same group having said pressure connection (28) is connected to said pressure source (24) and/or the tank (25) via a control valve (27) while bypassing said further adjusting cylinder (7, 8) and bypassing the multi-position cylinder (10).

10. Agricultural working machine according to one of the preceding claims, wherein an indicator device (30) is provided for indicating the regulating distance of the adjusting cylinders (3, 4; 5, 6) and/or indicating the working position of the working units (2), which is configured to operate as a function of the regulating distance of the piston rod (11) and receives the regulating distance of the piston rod (11) as an input control variable.

11. Agricultural working machine according to the preceding claim, wherein the indicator device (30) comprises a pointer (31) which is mechanically hinged to the piston rod (11).

12. Agricultural working machine according to the preceding claim, wherein the piston rod (11) emerges from the end face of the multi-position cylinder (10) and is connected in an articulated manner to said pointer (31) by its emerging piston rod section.

## Revendications

1. Engin de travail agricole comportant plusieurs unités de travail (2) montées de manière réglable, qui peuvent être réglées en hauteur et/ou déportées par respectivement au moins un cylindre de réglage (3, 4 ; 5, 6 ; 7, 8), les cylindres de réglage étant raccordés à un diviseur de débit (9) hydraulique pour la coordination des mouvements de cylindre de réglage, le diviseur de débit (9) étant réalisé sous la forme d'un cylindre multiple (10) qui présente plusieurs pistons (12, 13), fixés sur une tige de piston (11) commune, qui se déplacent dans plusieurs chambres de cylindre (14, 15) fixées axialement les unes par rapport autres, et qui y limitent des chambres annulaires (16, 17), **caractérisé en ce qu'**un groupe d'au moins deux cylindres de réglage (3, 4 ; 5, 6) montés en parallèle les uns avec les autres est raccordé à chacune des au moins deux chambres annulaires (16, 17) du cylindre multiple (10), lesdits groupes étant respectivement raccordés par une chambre de travail (20, 21) à l'une desdites chambres annulaires (16, 17) du cylindre multiple (10), au moins un des cylindres de réglage (3, 4 ; 5, 6) d'un groupe respectif étant réalisé à double effet et étant monté en série avec un autre cylindre de réglage (7, 8) à la manière d'un agencement de cylindres maître-esclave et au moins un autre des cylindres de réglage (3, 4 ; 5, 6) d'un groupe respectif étant raccordé à la source de pression (24) et/ou au réservoir (25) en contournant l'autre cylindre de réglage (7, 8) par le biais d'une soupape de commande (27).

2. Engin de travail agricole selon la revendication précédente, dans lequel les plusieurs chambres de cylindre (14, 15) sont limitées par un tube de cylindre (18) continu commun, qui est divisé en au moins deux chambres de cylindre (14, 15) par au moins une paroi de séparation (19), la tige de piston (11) traversant ladite au moins une paroi de séparation (19).

3. Engin de travail agricole selon la revendication 1, dans lequel les plusieurs chambres de cylindre (14, 15) sont limitées par des parties de cylindre séparées qui sont placées dos à dos de manière coaxiale les unes à côté des autres et reliées les unes aux autres de manière rigide.

4. Engin de travail agricole selon l'une des revendications précédentes, dans lequel les plusieurs chambres annulaires (16, 17) possèdent des aires de section transversale de dimension identique pour mettre à disposition des grandeurs de réglage hydraulique identiques.

5. Engin de travail agricole selon l'une des revendications précédentes, dans lequel des chambres de travail des cylindres de réglage (3, 4 ; 5, 6) qui génèrent le mouvement de réglage souhaité des cylindres de réglage (3, 4 ; 5, 6) sont respectivement raccordées à l'une des chambres annulaires (16, 17) du cylindre multiple (10) et soumises à l'action du volume déplacé de la chambre annulaire (16, 17) raccordée respective, le cylindre multiple (10) pouvant être relié à une source de pression ou étant relié à un raccordement de source de pression par au moins une chambre de compression (22, 23), qui est opposée aux chambres annulaires (16, 17) reliées aux cylindres de réglage (3, 4 ; 5, 6).

6. Engin de travail agricole selon la revendication précédente, dans lequel toutes les chambres de compression (22, 23) du cylindre multiple (10) qui travaillent à l'encontre des chambres annulaires (16, 17) du cylindre multiple (10) reliées aux cylindres de réglage (3, 4 ; 5, 6), peuvent être raccordées, montées en parallèle les unes avec les autres, à ladite source de pression (24).

7. Engin de travail agricole selon l'une des deux revendications précédentes, dans lequel l'au moins une chambre de compression (22, 23) du cylindre multiple (10), qui travaille à l'encontre des chambres annulaires (16, 17) du cylindre multiple (10), est raccordée à ladite source de pression (24) par le biais d'une soupape de commande (26), en particulier une soupape de commande de pression.

8. Engin de travail agricole selon l'une des revendications précédentes, dans lequel les cylindres de réglage (3, 4 ; 5, 6) raccordés au cylindre multiple (10) peuvent être reliés, en contournant le cylindre multiple (10), à la source de pression (24) et/ou au réservoir (25) par le biais d'une soupape de commande (27) et/ou par le biais d'un autre cylindre de réglage (7, 8) monté en série.

9. Engin de travail agricole selon l'une des revendications précédentes, dans lequel les cylindres de réglage (3, 4 ; 5, 6) de chaque groupe présentent chacun une chambre de compression (27), qui est opposée à la chambre de travail (20, 21) reliée à une chambre annulaire (16, 17) du cylindre multiple (10), et présentent chacun un raccordement de pression (28) pour le raccordement à la source de pression (24) et/ou au réservoir (25), en particulier par le biais d'une soupape de commande (26), l'un des cylindres de réglage de chaque groupe étant raccordé à un autre cylindre de réglage (7, 8) par ledit raccordement de pression (28) et un autre cylindre de réglage du même groupe étant raccordé en contournant ledit autre cylindre de réglage (7, 8) et en contournant le cylindre multiple (10), par ledit raccordement de pression (28), à la source de pression (24) et/ou au réservoir (25) par le biais d'une soupape de commande (27).

10. Engin de travail agricole selon l'une des revendications précédentes, dans lequel il est prévu un dispositif indicateur (30) destiné à indiquer la course de réglage des cylindres de réglage (3, 4 ; 5, 6) et/ou indiquer la position de travail des unités de travail (2), ledit dispositif indicateur étant réalisé de façon à fonctionner en fonction de la course de réglage de la tige de piston (11) et recevant la course de réglage de la tige de piston (11) comme grandeur de réglage d'entrée.

11. Engin de travail agricole selon la revendication précédente, dans lequel le dispositif indicateur (30) présente une aiguille (31) qui est articulée mécaniquement sur la tige de piston (11).

12. Engin de travail agricole selon la revendication précédente, dans lequel la tige de piston (11) sort du cylindre multiple (10) par la face frontale et est reliée de manière articulée, par sa partie de tige de piston sortante, à ladite aiguille (31).
